# EUROPEAN PATENT APPLICATION

(11) **EP 3 923 556 A1**
(43) Date of publication of application: **15.12.2021**
(21) Application number: 20214553.8
(22) Date of filing: 16.12.2020
(51) Int. Cl.: H04M 3/22, H04M 3/50

(54) **METHOD AND APPARATUS FOR TESTING DIALOGUE PLATFORM, AND STORAGE MEDIUM**

(30) Priority: 12.06.2020 CN 202010537919
(71) Applicant: BEIJING BAIDU NETCOM SCIENCE AND TECHNOLOGY CO. LTD., 100085 Beijing (CN)
(72) Inventor: FAN, Kuo, Beijing, 100085 (CN); CHEN, Yutong, Beijing, 100085 (CN); WANG, Dongni, Beijing, 100085 (CN)
(74) Representative: Stöckeler, Ferdinand

(57) **Abstract**

A method for testing a dialogue platform is provided. The method includes: creating (101) at least one simulation test instance; sending (102) the test numbers to the dialogue platform to start a test; sending (103) the ringing simulation data to the dialogue platform, to receive task states fed back by the dialogue platform; sending (104) the call simulation data to the dialogue platform, to receive dialogue data fed back by the dialogue platform; and performing (105) a dialogue test on the dialogue platform based on the test tasks, the task states corresponding to the test tasks, and the dialogue data. The solution eliminates the dependence on the call center, reduces the cost, avoids harassment to users and improving the test efficiency, i.e., the problems in prior art are solved for high test costs and low efficiency as well as harassment to users.

## Description

### TECHNICAL FIELD

The present application relates to a field of computer technology, particularly to a field of deep learning and intelligent dialogue technology, and particularly to a method and an apparatus for testing a dialogue platform, and a storage medium.

### BACKGROUND

Telephone traffic volume is relatively large in a typical intelligent dialogue system since it is necessary to receive conversations from all parties. In order to ensure that the intelligent dialogue system may operate stably in the case of high concurrent calls, it is necessary to perform a simulation test on the intelligent dialogue system in advance.

It is necessary to rely on the environment of a call center to perform a dial-up test when performing the simulation test on the intelligent dialogue system in the related art. This requires the call center to pay a large amount of line usage fees and will also cause harassment to users, and the dial-up test is difficult. Therefore, it is an important problem for testers to get rid of the dependence on the call center so that testing on the intelligent dialogue system may be realized.

### SUMMARY

A method and an apparatus for testing a dialogue platform, an electronic device and a storage medium is provided.

In the present disclosure, a method for testing a dialogue platform is provided. According to the test tasks in different test instances, a dialogue test is performed on dialogue platform with the test numbers, ringing simulation data and call simulation data that are created in advance and required for testing the dialogue platform. A real phone call is not required for the dialogue test, which eliminates the dependence on the call center and avoids harassment to users. Thus, the cost is reduced and the test efficiency is higher.

The method for testing a dialogue platform disclosed in embodiments of the present disclosure may include: creating at least one simulation test instance, in which the simulation test instance comprises a plurality of test task information, each test task information comprises test numbers, ringing simulation data, and call simulation data; sending the test numbers to the dialogue platform to start a test; sending the ringing simulation data to the dialogue platform, to receive task states fed back by the dialogue platform; sending the call simulation data to the dialogue platform, to receive dialogue data fed back by the dialogue platform; and performing a dialogue test on the dialogue platform based on the test tasks, the task states corresponding to the test tasks, and the dialogue data.

In some embodiments, the method also includes: obtaining running state information of the dialogue platform; and performing a running test on the dialogue platform based on the running state information.

In some embodiments, the method also includes: constructing dialogue simulation data based on the dialogue data fed back by the dialogue platform, and sending the dialogue simulation data to the dialogue platform; and receiving further dialogue data fed back by the dialogue platform.

In some embodiments, the ringing simulation data are generated by: obtaining a current test number; and in response to a determination that the current test number belongs to a preset number segment, setting the ringing simulation data as a ringing state corresponding to the preset number segment.

In some embodiments, the ringing simulation data are generated by: generating a random ratio value randomly; and obtaining a ratio interval to which the random ratio value belongs, and setting the ringing simulation data as a ringing state corresponding to the ratio interval.

In some embodiments, the call simulation data are generated by: obtaining online call data; and generating the call simulation data based on the online call data.

In some embodiments, the call simulation data are generated by: determining a plurality of call durations; simulating and generating a call record for each call duration; and generating the call simulation data based on the call durations and the call records.

Embodiments of the present disclosure provide an apparatus for testing a dialogue platform. The apparatus includes: a creation module, configured to create at least one simulation test instance, in which the simulation test instance comprises a plurality of test task information, each test task information comprises test numbers, ringing simulation data, and call simulation data; a starting module, configured to send the test numbers to the dialogue platform to start the test; a receiving module, configured to send the ringing simulation data to the dialogue platform to receive task states fed back by the dialogue platform; and further configured to send the call simulation data to the dialogue platform, to receive dialogue data fed back by the dialogue platform; and a dialogue test module, configured to perform a dialogue test on the dialogue platform based on the test tasks, the task states corresponding to the test tasks, and the dialogue data.

In some embodiments, the apparatus also includes: an obtaining module, configured to obtain running state information of the dialogue platform; and a running test module, configured to perform a running test on the dialogue platform based on the running state information.

In some embodiments, the apparatus also includes: a constructing module, configured to construct dialogue simulation data based on the dialogue data fed back by the dialogue platform, and send the dialogue simulation data to the dialogue platform; and the receiving module, further configured to receive further dialogue data fed back by the dialogue platform.

In some embodiments, the creation module includes: an obtaining unit, configured to obtain a current test number; and a setting unit, configured to set the ringing simulation data as a ringing state corresponding to a preset number segment in response to a determination that the current test number belongs to the preset number segment.

In some embodiments, the creation module includes: a generating unit, configured to generate a random ratio value randomly; and a setting unit, configured to a ratio interval to which the random ratio value belongs, and set the ringing simulation data as a ringing state corresponding to the ratio interval.

In some embodiments, the apparatus also includes: an obtaining unit, configured to obtain online call data; and a generating unit, configured to generate the call simulation data based on the online call data.

In some embodiments, the apparatus also includes a determining unit, configured to determining a plurality of call durations; and a generating unit, configured to simulate and generate a call record for each call duration, and to generate the call simulation data based on the call duration and the call record.

Embodiments of the present disclosure provide a non-transitory computer-readable storage medium having computer instructions stored thereon. The computer instructions are configured to cause a computer to execute a method for testing a dialogue platform according to the present disclosure.

The technical solutions according to embodiments of the present invention may have the following beneficial effects:
At least one simulation test instance is created, wherein the simulation test instance includes a plurality of test task information, each test task information includes test numbers, ringing simulation data, and call simulation data; the test numbers are sent to the dialogue platform to start a test; the ringing simulation data are sent to the dialogue platform, to receive task states fed back by the dialogue platform; the call simulation data are sent to the dialogue platform, to receive dialogue data fed back by the dialogue platform; and a dialogue test is performed on the dialogue platform based on the test tasks, the task states corresponding to the test tasks, and the dialogue data. In this application, a plurality of test instances are created, corresponding dialogue test data is generated based on the simulation test instance, and the dialogue platform is tested based on the dialogue test data. In this way, a real phone call is not required for the dialogue test, which eliminates the dependence on the call center, saves the resources, and avoids the harassment to users. Thus the test efficiency is higher.

It should be understood that the content described in this section is not intended to identify key or important features of the embodiments of the present disclosure, nor is it intended to limit the scope of the present disclosure. Other features of the present disclosure will be easily understood by the following description.

### BRIEF DESCRIPTION OF THE DRAWINGS

The drawings are used to better understand this solution, and do not constitute a limitation to the present application, in which:
FIG. 1 is a first schematic flowchart of a method for testing a dialogue platform according to embodiments of the present application;
FIG. 2 is a second schematic flowchart of a method for testing a dialogue platform according to embodiments of the present application;
FIG. 3 is a third schematic flowchart of a method for testing a dialogue platform according to embodiments of the present application;
FIG. 4 is a fourth schematic flowchart of a method for testing a dialogue platform according to embodiments of the present application;
FIG. 5 is a fifth schematic flowchart of a method for testing a dialogue platform according to embodiments of the present application;
FIG. 6 is a sixth schematic flowchart of a method for testing a dialogue platform according to embodiments of the present application;
FIG. 7 is a seventh schematic flowchart of a method for testing a dialogue platform according to embodiments of the present application;
FIG. 8 is a structural schematic diagram of an apparatus for testing a dialogue platform according to embodiments of the present application; and
FIG. 9 is a block diagram of an electronic device of a method for testing a dialogue platform of embodiments of the present application.

### DETAILED DESCRIPTION

Description will be made below to example embodiments of the present application in conjunction with accompanying drawings, which includes various details of embodiments of the present application to facilitate understanding and should be regarded as merely examples. Therefore, it should be recognized by the skilled in the art that various changes and modifications may be made to the embodiments described herein without departing from the scope and spirit of the present application. Meanwhile, for clarity and conciseness, descriptions for well-known functions and structures are omitted in the following description.

A method and an apparatus for testing a dialogue platform, an electronic device and a storage medium are described below in the embodiments of the present application with reference to the accompanying drawings.

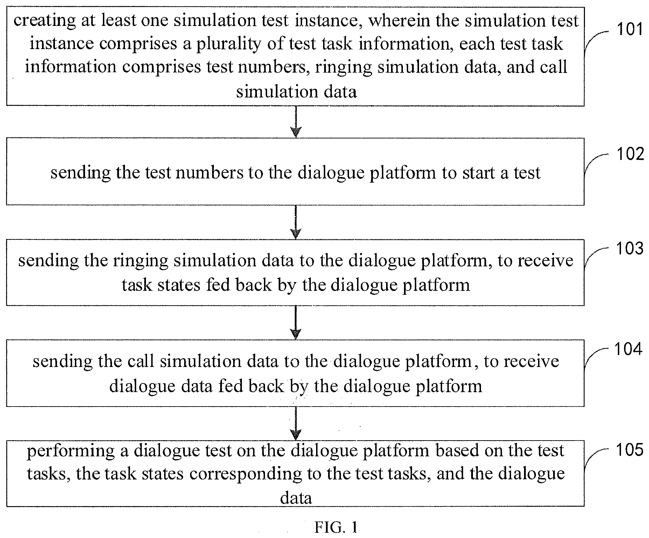

FIG. 1 is a first schematic flowcharts of a method for testing a dialogue platform according to embodiments of the present application;
when testing a dialogue platform, the related art adopts a test scheme that the integrated testing on the dialogue platform is realized by dialing test (that is, real dialing) in an environment integrated with the call center. It is necessary for testers of the dialogue platform to collect a large number of real mobile phone numbers before dialing, but it is difficult to collect a large number of real mobile phone numbers while consuming a lot of manpower. At the same time, not only a large amount of charges will be paid when making a large number of calls with a large number of calling lines, but also the harassment will be led to the receiving personnel, thereby reducing the overall test efficiency. In this application, test numbers, ringing simulation data and call simulation data are generated in advance based on the test requirements, so that the call test on the dialogue platform is achieved. In this way, the call test eliminates the dependence on the call center, reduces the test cost and improves the test efficiency without causing harassment to users.

As shown in FIG. 1, the method includes the following steps:
Step 101: at least one simulation test instance is created, the simulation test instance includes a plurality of test task information, each test task information includes test numbers, ringing simulation data, and call simulation data.

The execution subject of this embodiment is an apparatus for testing a dialogue platform, which may be configured in a testing system based on mock technology. The dialogue platform in this application is a system to be tested which may be configured in an intelligent interactive product, for example, an intelligent robot.

The simulation test instance, also refers to simulation test case, is generated based on the requirements of the test scenario in order to test the dialogue platform. Based on the created test instance, a complete test of each module of the dialogue platform may be finished. There may be one or more simulation test instances. The simulation test instances may be executed sequentially or in parallel when there are multiple simulation test instances.

In a scenario, there is one simulation test instance through which a dialogue test is performed on the dialogue platform. That is, the dialogue test is performed according to the steps of the method for testing the dialogue platform in this embodiment, so as to realize the dialogue test without relying on the call center.

In a second scenario, the simulation test instances are executed sequentially when there are multiple simulation test instances, wherein the execution order may be preset or may be a random execution order. Each simulation test instance is tested according to the steps of the method for testing the dialogue platform in this embodiment, so as to realize the dialogue test without relying on the call center.

In a third scenario, the simulation test instances are performed in parallel when there are multiple simulation test instances. Each simulation test instance is tested according to the steps of the method for testing the dialogue platform in this embodiment, so as to realize the dialogue test without relying on the call center.

A plurality of test instances may be identical or different. By setting up multiple simulated test instances to test the dialogue platform in parallel, the performance and stability of the dialogue platform against large concurrent data may be test, and stress test may be performed on the dialogue platform, for example, testing whether there is a blocking problem on the dialogue platform when multiple calls are in progress at the same time. Furthermore, the dialogue platform is adaptively adjusted based on the results of testing multiple test instances in parallel.

In this embodiment, each simulation test instance contains a plurality of test task information needed in the test process, wherein the test task may be a call test task, a performance scheduling test task, etc. The call test task may be divided into a calling retrial test task, a call test task, an abnormal call test task, etc. based on different test requirements and test scenarios, which are not listed one by one in this embodiment.

In this embodiment, test numbers are automatically generated by the testing system based on different number types and used for testing the platform to meet the testing requirements of different scenarios.

In a scenario, the test numbers are automatically generated based on different mobile phone number segments for different operators, for example, mobile phone numbers starting with 133, mobile phone numbers starting with 185, or mobile phone numbers starting with 189, which are not listed one by one in this embodiment.

In a second scenario, the test numbers of landlines are generated based on different provinces and cities, in which the area code are separated by brackets or "-" from the other numbers.

In a third scenario, the test numbers are automatically generated based on short number and special number of the mobile phone. For example, the short number of the host is 720, and the short number of the associated bound mobile phone is 722. The special number herein refers to a number generated based on the requirements for a specific scene, such as a common fire alarm number 119, an emergency number 110, etc., as well as a custom number such as the number 520 expressing love.

In a fourth scenario, an abnormal number is generated, such as a number that does not meet the requirement for 11 digits or a number with a wrong format, for example, a test number with 9 or 10 digits is generated as a normal mobile phone number has 11 digits, which are not listed one by one in this embodiment.

In this embodiment, the ringing simulation data refers to the data simulating returned states for different call states to truly reflect the connections between online customers during a conversation. There may be many returned states for the call states, including: during a call, hang-up, shutdown, busy line, out of service, empty number, manual transfer and others, wherein the generation of ringing simulation data will be described in detail in the following embodiments.

In this embodiment, the call simulation data simulate the call data of the user during a real call, wherein the call simulation data are varied with different call scenarios. Taking a call between a user and a robot on the dialogue platform as an example, for example, in a scenario where the user is currently unwilling to make a call and will immediately hang up upon the call is connected, the call simulation data includes a short call duration and a call record only containing opening remarks of the robot on the dialogue platform. For another example, in a scenario where the user interrupts the robot during a call, the call duration may be longer due to the interaction, so the generated call simulation data includes the conversation interrupted by the user and the robot's response after the interruption. The generation of call simulation data will be described in detail in the following embodiments.

Step 102: the test numbers are sent to the dialogue platform to start a test.

Specifically, after the test numbers are generated by the testing system, the generated test numbers are sent to the dialogue platform to start a test on the dialogue platform.

Step 103: the ringing simulation data are sent to the dialogue platform, to receive task states fed back by the dialogue platform.

Specifically, after the dialogue platform is started, the ringing simulation data are sent to the dialogue platform, so that task states fed back by the dialogue platform are generated based on the ringing simulation data, wherein the task state feedbacks obtained from the dialogue platform are different for different ringing simulation data. For example, when the ringing state corresponding to current ringing simulation data is "shut down", the task state fed back by the dialogue platform is "to be retried". For another example, when the ringing state corresponding to current ringing simulation data is "hang up", the task state fed back by the dialogue platform is "completed". For another example, when the ringing state corresponding to current ringing simulation data is "out of service", the task state fed back by the dialogue platform is "abnormal". For different ringing simulation data, the task states fed back by the dialogue platform may refer to Table 1 below. Table 1 lists the correspondence between various ringing simulation data and task state feedbacks.

**Table 1**

| | |
|---|---|
| ringing simulation data (ringing states) | task state feedbacks |
| during a call, manual transfer | running |
| others (such as hurry), shutdown, busy line | waiting for retrial |
| hang-up | completed |
| out of service, empty number, others (such as unknown) | abnormal |

Step 104: the call simulation data are sent to the dialogue platform, to receive dialogue data fed back by the dialogue platform.

The call simulation data here refers to different call durations, wherein the call duration may be a random duration or a fixed duration set by the user. Based on different call durations, the call data of users in the real call are simulated.

Specifically, after the dialogue platform is started, the call simulation data is sent to the dialogue platform, so that the dialogue platform generates corresponding dialogue data feedbacks based on the call simulation data, which thus obtains the call data during the real call.

Step 105: a dialogue test is performed on the dialogue platform based on the test tasks, the task states corresponding to the test tasks, and the dialogue data.

In this embodiment, different test scenarios correspond to different test tasks, wherein the test tasks are, for example, calling retrial tests, batch scheduling performance tests, system alarm test, etc. The test numbers, ringing simulation data, and call simulation data included in different test tasks are also different, and the task state feedbacks corresponding to ringing simulation data and the dialogue data feedbacks corresponding to call simulation data are also different. Targeted testing on the dialogue platform is achieved based on the test requirements of different scenarios. And dialogue tests in various real scenarios may be simulated without relying on the call center, thereby avoiding harassment to users improving and thus reducing testing cost.

In order to facilitate the understanding of the dialogue test process on the dialogue platform, three specific testing scenarios are used as examples to illustrate.

In a scenario where the test task is a calling retrial task. The testing system determines the test numbers, ringing simulation data, and call simulation data required for the calling retrial task and the call simulation data in the calling retrial task are zero, which means that no call simulation data is required. First, the testing system sends the test numbers to the dialogue platform to start the dialogue test, so that the dialogue platform makes phone calls based on the test numbers. After receiving the call request, the testing system will respond to the ringing state (such as busy line) of the test number, and send corresponding ringing state (such as busy line) to the dialogue platform to receive the task state (i.e., "waiting for retrial") of the corresponding (busy line) ringing state fed back by the dialogue platform. Further, the call is dialed again based on the task state of "waiting for retrial" for the calling retrial task, until a preset number of retrial is completed or the preset retrial time is met. Then the calling retrial task is ended, thereby completing the dialogue test on the dialogue platform based on the calling retrial task.

In another scenario where the test task is a normal call test task. The testing system determines the test numbers, ringing simulation data and call simulation data corresponding to the call test task. For ease of description, one test number is used to illustrate in this embodiment. Specifically, the testing system sends the test number such as the number 187*****075, to the dialogue platform to start a test, so that the dialogue platform sends the test number to the testing system. The testing system then determines the ringing simulation data corresponding to the test number as "during a call " and send the ringing simulation data of "during a call" to the dialogue platform, to receive the task state of "running" fed back by the dialogue platform. Thus, a call based on the test number starts and the testing system sends the call simulation data to the dialogue platform, for example "hi, hello" is sent, so that the dialogue platform determines the corresponding dialogue data feedback from the call simulation data, for example the dialogue data feedback "hello, who is speaking? what's the matter?" from the dialogue platform is received. This means that the dialogue platform complete a full call test task based on the call duration and full dialogue data preset in the call simulation data. That is, the scheduling function of each module in the dialogue platform is tested, and the dialogue tests under various scenarios may be performed on the dialogue platform without relying on the call center with low cost and high efficiency.

In another scenario where the test task is a system alarm test task, where the alarm test task is a test task based on a specific call completing rate, and is achieved based on a preset relationship between a preset call completing rate and system's response. For example, when the call completing rate is 30%, it is tested whether the system feeds back alarm information. That is to say, when 1000 test numbers are tested and 70% of them are not completed, which is lower than a normal call completing rate, there may be an abnormality in the dialogue platform in this case and it is necessary to send an alarm for testing the response capability of the dialogue platform to the alarm, so that the alarm may be sent in a real scenario and the dialogue system may be processed in real time. Specifically, the test numbers, ringing simulation data, and call simulation data required for the system alarm test task are determined, where the ringing simulation data are configured to proportionally simulate ringing states of real online users. For example, when it is simulated 70% of users are not completed by making calls through the test numbers, the testing system may return the ringing state of "shutdown". Furthermore, the corresponding test number is used to start the dialogue platform. The corresponding ringing simulation data are sent to the dialogue platform, so as to confirm whether the task state fed back by the dialogue platform may be received, and the corresponding call simulation data are sent to the dialogue platform, so as to confirm whether the dialogue data fed back by the dialogue platform may be received and further test whether each module of the dialogue platform may feedback corresponding response data based on the test task. Further, the dialogue test is achieved based on the system alarm test task when the dialogue platform is independent of the call center.

It should be noted that, the testing of the dialogue platform in the above scenario is only an example, and does not constitute a limitation to this application. In this application, the test numbers, ringing simulation data, and call simulation data required under various test scenarios may be generated in advance, so that the test numbers, ringing simulation data, and call simulation data may be used to test the dialogue platform in various scenarios. In this embodiment, the tests of the dialogue platform under various scenarios are not listed one by one.

In the method for testing the dialogue platform of this embodiment, at least one simulation test instance is created, wherein the simulation test instance includes a plurality of test task information, each test task information includes test numbers, ringing simulation data, and call simulation data; the test numbers are sent to the dialogue platform to start a test; the ringing simulation data are sent to the dialogue platform, to receive task states fed back by the dialogue platform; the call simulation data are sent to the dialogue platform, to receive dialogue data fed back by the dialogue platform; and a dialogue test is performed on the dialogue platform based on the test tasks, the task states corresponding to the test tasks, and the dialogue data. In this application, a plurality of test instances are created, corresponding dialogue test data is generated based on the simulation test instance, and the dialogue platform is tested based on the dialogue test data, which eliminates the dependence on the call center, avoids harassment to users, improves test efficiency, and reduces test costs.

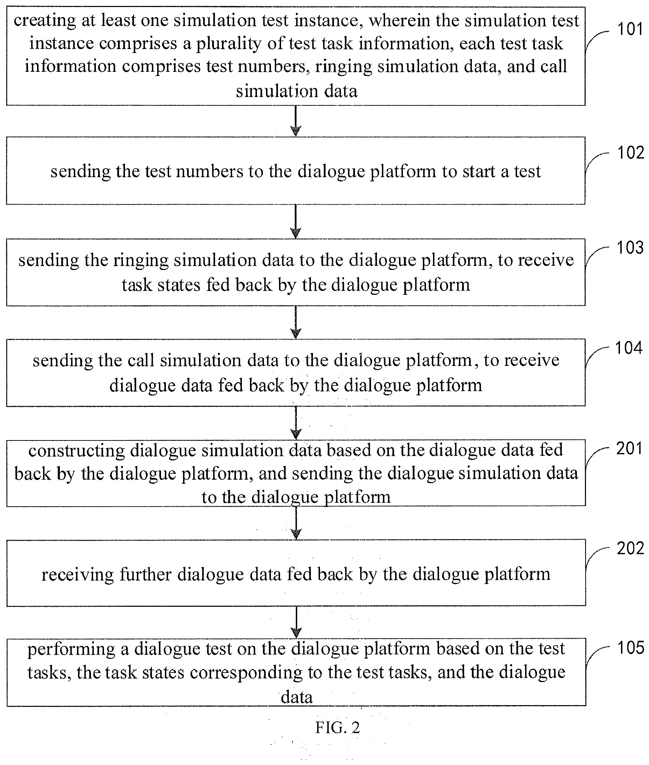

As described in the previous embodiment, the task states fed back by the dialogue platform may be received after sending the call simulation data to the dialogue platform, and the dialogue test is then performed on the dialogue platform based on the test tasks, the task states corresponding to the test tasks, and the dialogue data. Thus, the dialogue test is completed when the dialogue platform is independent of the call center. In this embodiment, the voice stream may also be simulated based on the dialogue data fed back by the dialogue platform to perform multiple rounds of dialogue, so as to test whether the dialogue platform may realize intelligent dialogue. That is, a dialogue model is set in the dialogue platform, which may be obtained based on a deep learning method. When performing the multiple rounds of dialogue, the dialogue effect of the dialogue model may be evaluated and the parameters of the dialogue model may be then adjusted to improve the effect of multiple rounds of dialogue. To this end, this embodiment provides a method for testing a dialogue platform. FIG. 2 is a second schematic flowchart of a method for testing a dialogue platform according to embodiments of the present application.

As shown in FIG. 2, after step 104, the following steps are included:
Step 201: dialogue simulation data are constructed based on the dialogue data fed back by the dialogue platform, and the dialogue simulation data are sent to the dialogue platform.
Step 202: further dialogue data fed back by the dialogue platform are received.

In this embodiment, after receiving the dialogue data fed back by the dialogue platform in the above step 104, the dialogue simulation data is constructed based on the dialogue data fed back by the dialogue platform, wherein the dialogue simulation data are simulated and generated based on the recording data of real users, and sent to the dialogue platform to receive the dialogue data further fed back by the dialogue platform based on the dialogue simulation data.

For example, in case that the dialogue data received from the dialogue platform is "hello", the constructed dialogue simulation data is "I'd like to find where my parcel is" and sent to the dialogue platform. The dialogue data received further fed back by the dialogue platform is "please say or enter your parcel express number", thus realizing the simulation on multiple rounds of dialogue and obtaining multiple rounds of dialogue data fed back by the dialogue platform. Further, the response capability of the dialogue platform to multiple rounds of dialogue may be tested based on multiple rounds of dialogue data in the corresponding scenario, which meets the test requirements of various call scenarios.

In the method for testing the dialogue platform of this embodiment, at least one simulation test instance is created, wherein the simulation test instance includes a plurality of test task information, each test task information includes test numbers, ringing simulation data, and call simulation data; the test numbers are sent to the dialogue platform to start a test; the ringing simulation data are sent to the dialogue platform, to receive task states fed back by the dialogue platform; the call simulation data are sent to the dialogue platform, to receive dialogue data fed back by the dialogue platform; and a dialogue test is performed on the dialogue platform based on the test tasks, the task states corresponding to the test tasks, and the dialogue data. In this application, a plurality of test instances are created, corresponding dialogue test data is generated based on the simulation test instance, and the dialogue platform is tested based on the dialogue test data, which eliminates the dependence on the call center, avoids harassment to users, improves test efficiency, and reduces testing costs. At the same time, the response capability of dialogue platform to multiple rounds of dialogue is tested based on multiple rounds of dialogue data, which meets the requirements of intelligent dialogue scenarios, improving the performance of the dialogue platform.

The previous embodiment describes that it is necessary to test the testing platform based on the ringing simulation data. Therefore, the following two embodiments specifically describe how to generate the ringing simulation data based on the previous embodiment.

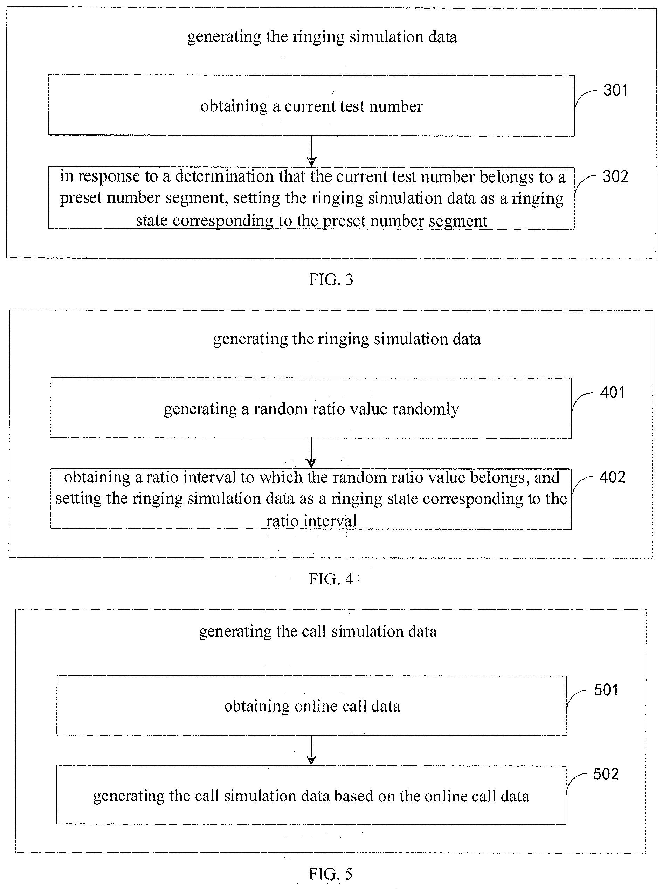

FIG. 3 is a third schematic flowchart of a method for testing a dialogue platform according to embodiments of the present application, where a possible implementation of the method for generating the ringing simulation data is provided.

As shown in FIG. 3, the ringing simulation data in step 101 may be generated by the following steps:
Step 301, a current test number is obtained.
Step 302, the ringing simulation data are set as a ringing state corresponding to a preset number segment in response to a determination that the current test number belongs to the preset number segment.

The preset number segment here is generated based on the requirements of different test scenarios, and different preset number segments have corresponding ringing states.

Table 2 shows the correspondence between preset number segments and ringing states, where different test number segments correspond to respective preset number segments, i.e., the preset number segments corresponding to different test number segments may be identical or different. And different preset number segments correspond to different ringing states. This embodiment mainly lists 9 common ringing states (that is, ringing state data), which do not constitute a limitation to this embodiment.

**Table 2**

| | | |
|---|---|---|
| test numbers | preset number segments | ringing states |
| test number 1 | preset number segment 1 | during a call |
| test number 2 | preset number segment 3 | hang-up |
| test number 3 | preset number segment 2 | shutdown |
| test number 4 | preset number segment 5 | busy line |
| test number 5 | preset number segment 7 | out of service |
| test number 6 | preset number segment 6 | empty number |
| test number 7 | preset number segment 8 | manual transfer |
| test number 8 | preset number segment 9 | others (a hurry state) |
| test number 9 | preset number segment 4 | others (an unknown state) |
| ...... | ...... | ...... |
| test number N | preset number segment 1 | during a call |

For example, for the mobile phone number segment starting with the preset number segment 177-178, the ringing state corresponding to the preset number segment is shutdown. The ringing simulation data corresponding to the generated test numbers that contain the mobile phone test number of 177*******2 and 177*******8 is set as a ringing state of shutdown. In this way, the corresponding ringing simulation data is generated for the test number to reflect real call completing situation of users for a specific number.

It should be noted that, for the test numbers that do not belong to preset number segments, the ringing states may be returned in a random manner, so that different test numbers have their respective returned ringing states.

In the method for testing the dialogue platform of the present application, specific test requirements may be met by setting the preset number segments and constructing the correspondence between the preset number segments and ringing states. For example, in a test scenario where a plurality of test numbers are required to test, it is necessary to simulate a plurality of ringing states in one test. After the test is completed, the tester may check in an automated batch whether the returned states of system meet expectations based on the correspondence between the preset number segments and the ringing states, thereby making automated test efficiency higher.

Based on the above embodiment, FIG. 4 is a fourth schematic flowchart of a method for testing a dialogue platform according to embodiments of the present application, where another possible implementation of the method for generating the ringing simulation data is provided.

As shown in FIG. 4, the ringing simulation data in step 101 may be generated by the following steps:
Step 401, a random ratio value is randomly generated.
Step 402: a ratio interval to which the random ratio value belongs is obtained, and the ringing simulation data are set as a ringing state corresponding to the ratio interval.

In this embodiment, the generated ringing simulation data do not depend on the generated test numbers. That is, the specific test number is not set for the corresponding ringing state, but the corresponding ratio interval is set in advance based on the state. Then the ringing simulation data are set as a ringing state corresponding to a ratio interval, based on the ratio interval to which the random ratio value belongs. For example, the ratio interval to which 20% of the test numbers belong corresponds to a ringing state of empty number, the ratio interval to which 16% of the test numbers belong corresponds to a ringing state of busy line, and the ratio interval to which 35% of the test numbers belong corresponds to a ringing state of during a call, which are not listed one by one this embodiment.

The method for generating the ringing simulation data of this embodiment may meet the requirements for a custom test. According to online operation data, it may simulate behaviors of real online customers, and the corresponding ringing state is obtained by setting a random ratio value. The system performance is tested based on a specific call completing rate and the boundary or abnormal conditions of the system are also simulated. For example, it is tested whether the system under test may trigger an alarm when the call completing rate is less than a certain ratio threshold, so as to ensure the stability of the system under test. Specifically, the alarm test task is a test task based on a specific call completing rate, and is achieved based on a preset relationship between a preset call completing rate and system's response. For example, when the call completing rate is 30%, it is tested whether the system feeds back alarm information. That is to say, when 1000 test numbers are tested and 70% of them are not completed, which is lower than a normal call completing rate, there may be an abnormality in the dialogue platform in this case and it is necessary to send an alarm for testing the response capability of the dialogue platform to the alarm, so that the alarm may be sent in a real scenario and the dialogue system may be processed in real time.

The previous embodiment describes that it is necessary to test the testing platform based on call simulation data. Therefore, the following two embodiments specifically describe how to generate the call simulation data.

Based on the previous embodiment, FIG. 5 is a fifth schematic flowchart of a method for testing a dialogue platform according to embodiments of the present application, where a possible implementation of the method for generating the call simulation data is provided.

As shown in FIG. 5, the call simulation data in step 101 may be generated by the following steps:
Step 501: online call data are obtained.

The online call data here refers to the call data of real online users, for example, the online call data may be obtained from the data stored in the server.

Step 502: the call simulation data are generated based on the online call data call simulation data based on the online call data.

Specifically, after obtaining the online call data, the call durations of the online call data are counted based on the online call data, and the call durations are determined in a ratio, where the ratio is determined randomly, for example, 20% of call durations is 10 seconds, 60% of call durations is 3 minutes, 10% of call durations is 30 minutes, etc., which are not listed one by one here. The call data corresponding to the call durations are obtained, and the call durations determined as the call simulation data based on the ratio and the corresponding call data.

In this embodiment, different call durations and corresponding call data are determined in a ratio based on the real online data, so that the generated call simulation data are as close to reality as possible, thereby improving the effect of testing the dialogue platform.

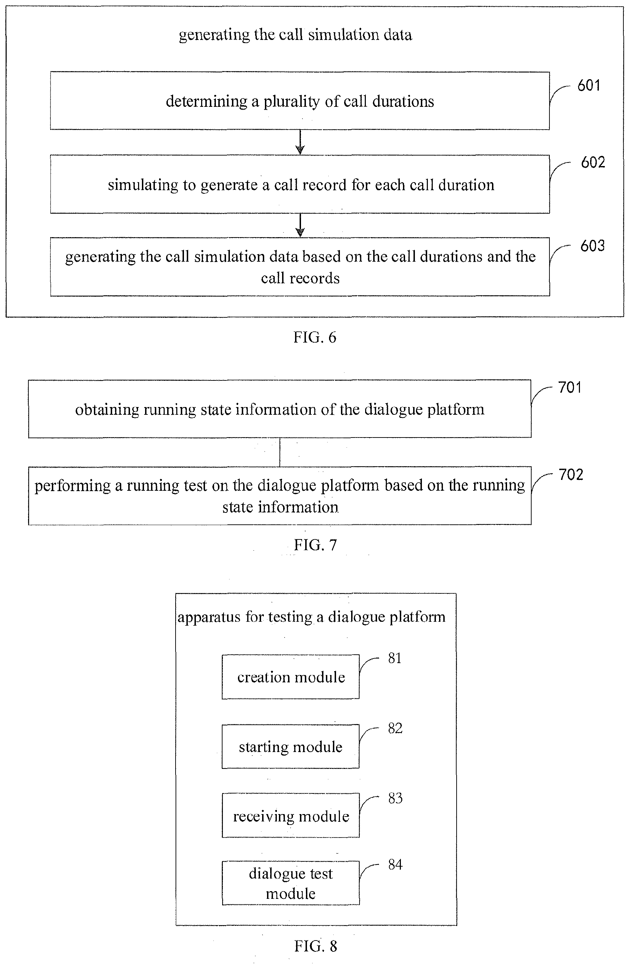

Based on the above embodiment, FIG. 6 is a sixth schematic flowchart of a method for testing a dialogue platform according to embodiments of the present application, where another possible implementation of the method for generating the call simulation data is provided.

As shown in FIG. 6, the call simulation data in step 101 may be generated by the following steps:
Step 601: a plurality of call durations are determined.
Step 602: a call record for each call duration is simulated and generated.
Step 603: the call simulation data are generated based on the call durations and the call records.

The call simulation data here contains the call durations and the call records.

In this embodiment, different call durations may be set in different call scenarios, and the call records corresponding to different call durations are also different, so that the generated call simulation data are also different. The following describes the different call durations and call records set for different scenarios (that is, the call content).

In a first scenario, the call scenario where the user hangs up in seconds is simulated, and the corresponding call simulation data is generated.

Specifically, in the scenario where the user hangs up in seconds, the call duration is relatively short, so it may be set as 4 seconds, for example. The generated call record only contains the robot's opening remarks. For example, in a real scenario where the robot says "hello, I am XX" after a call is connected while the user hangs up directly, the entire call lasts about 3 seconds. Therefore, a shorter first call duration and the corresponding call record are set as the call simulation data in this scenario.

In a second scenario, the silent call scene of the user is simulated and the corresponding call simulation data are generated.

Specifically, after the user hears opening remarks of the robot upon connecting a call, the user may not be interested in them and does not want to continue the call, or the user is thinking based on the opening remarks, so there will be silent for a period of time, that is, no answer from the user. Therefore, the call duration in this scenario is set as a second call duration, while the corresponding call records containing the opening remarks of the robot and the silent reply are determined as the call simulation data in this scenario.

In a third scenario where it is simulated that the user interrupts the robot, the corresponding call simulation data are generated.

Specifically, when the user is talking with the robot, there will be situations where the user interrupts the robot, so the robot generates the interrupted reply utterance based on the dialogue interrupted by the user, the call records containing the utterances interrupted by the user and robot's reply utterances and the corresponding call durations are determined as the call simulation data in this scenario.

In a fourth scenario where it is simulated that the user insults the robot, the corresponding call simulation data are generated.

Specifically, when the user is talking with the robot, there will be situations where the user insults the robot due to dissatisfaction, etc. When the user's abusive words are identified, an abusive event is triggered to make the robot actively hang up the call. The call records containing the user's abusive words to the robot and the robot's reply are determined as the call simulation data in this scenario.

In a fifth scenario where it is simulated that a normal complete call scenario, the corresponding call simulation data are generated.

Specifically, the call duration of the complete call is set based on a preset maximum of the call duration set by the dialogue platform. That is, the call duration of the complete call is less than or equal to the preset maximum of the call duration. The call records containing the dialogue between the robot and the customer are generated based on different conversation procedures, and are determined as the call simulation data in this scenario.

In this embodiment, different call durations are set and different call records are matched based on different call scenarios. The set different call durations and corresponding call records are determined as the call simulation data in this scenario, so that the call simulation data generated in each scenario is as close to the real scenario as possible. Further, specific scenarios may be tested based on the generated call simulation data, such as a scenario of hanging up in seconds, an abnormal scenario of ultra-long call, etc. The call simulation data are flexibly generated with higher test efficiency.

Based on the above embodiment, FIG. 7 is a seventh flowchart of a method for testing a dialogue platform according to embodiments of the present application. As shown in FIG. 7, after step 105, the method further includes the following steps:
Step 701: running state information of the dialogue platform is obtained.
Step 702: a running test is performed on the dialogue platform based on the running state information.

In this embodiment, the running state information of the dialogue platform may also be obtained during the dialogue test on the dialogue platform, where the running state information includes system memory usage information of the system under test, central processing unit information, and dialogue duration information, error information of the dialogue platform, etc. The running test on dialogue platform is performed to test the stability and pressure tolerance of the dialogue platform Based on the running state information, and the running test report is generated based on the testing results, so as to improve the performance of the dialogue platform based on the running test report.

In the method for testing the dialogue platform of this embodiment, the stability and pressure tolerance of the dialogue platform is tested by collecting the running state information of the dialogue platform in the testing process and performing the running test on the dialogue platform based on the running state information, so as to improve the performance of the dialogue platform based on the test results.

In order to implement the above embodiment, this embodiment provides an apparatus for testing a dialogue platform.

FIG. 8 is a structural schematic diagram of an apparatus for testing a dialogue platform according to an embodiment of the application.

As shown in FIG. 8, the apparatus includes: a creation module 81, a starting module 82, a receiving module 83, and a dialogue test module 84.

The creation module 81 is configured to create at least one simulation test instance, wherein the simulation test instance includes a plurality of test task information, each test task information includes test numbers, ringing simulation data, and call simulation data.

The starting module 82 is configured to send the test numbers to the dialogue platform to start the test;
The receiving module 83 is configured to send the ringing simulation data to the dialogue platform to receive task states fed back by the dialogue platform.

The above receiving module 83 is further configured to send the call simulation data to the dialogue platform, to receive dialogue data fed back by the dialogue platform.

The dialogue test module 84 is configured to perform a dialogue test on the dialogue platform based on the test tasks, the task states corresponding to the test tasks, and the dialogue data.

In a possible implementation of the embodiment of the present invention, the apparatus further includes: an obtaining module and a running test module.

The obtaining module is configured to obtain running state information of the dialogue platform.

The running test module is configured to perform a running test on the dialogue platform based on the running state information.

In a possible implementation of the embodiment of the present invention, the apparatus further includes: a constructing module.

The constructing module is configured to construct dialogue simulation data based on the dialogue data fed back by the dialogue platform, and send the dialogue simulation data to the dialogue platform.

The above receiving module 83 is further configured to receive further dialogue data fed back by the dialogue platform.

In a possible implementation of the embodiment of the present invention, the creation module 81 described above is implemented through the following two possible implementations when generating the ringing simulation data.

As a possible implementation, the above creation module 81 includes: an obtaining unit and a setting unit.

The obtaining unit is configured to obtain a current test number.

The setting unit is configured to set the ringing simulation data as a ringing state corresponding to a preset number segment in response to a determination that the current test number belongs to the preset number segment.

As another possible implementation, the above creation module 81 further includes: a generating unit.

The generating unit is configured to generate a random ratio value randomly.

The above setting unit is configured to a ratio interval to which the random ratio value belongs, and set the ringing simulation data as a ringing state corresponding to the ratio interval.

In a possible implementation of the embodiment of the present invention, the above creation module 81 is implemented through the following two possible implementations when generating call simulation data.

As a possible implementation, the above obtaining unit is configured to obtain online call data. The above generating unit is configured to generate the call simulation data based on the online call data.

As another possible implementation, the above determining unit is configured to determine a plurality of call durations. The above generating unit is further configured to simulate and generate a call record for each call duration, and to generate the call simulation data based on the call duration and the call record.

It should be noted that the foregoing explanation of the method embodiment for testing the dialogue platform is also applicable to the apparatus embodiment for testing the dialogue platform, and the principle of the method embodiment is the same as that of the apparatus embodiment, which will not be repeated here.

In the apparatus for testing the dialogue platform of this embodiment, at least one simulation test instance is created, wherein the simulation test instance includes a plurality of test task information, each test task information includes test numbers, ringing simulation data, and call simulation data; the test numbers are sent to the dialogue platform to start a test; the ringing simulation data are sent to the dialogue platform, to receive task states fed back by the dialogue platform; the call simulation data are sent to the dialogue platform, to receive dialogue data fed back by the dialogue platform; and a dialogue test is performed on the dialogue platform based on the test tasks, the task states corresponding to the test tasks, and the dialogue data. In this application, a plurality of test instances are created, corresponding dialogue test data is generated based on the simulation test instance, and the dialogue platform is tested based on the dialogue test data, which eliminates the dependence on the call center and thus reduces the test cost, avoids harassment to users and thus improves test efficiency.

According to embodiments of the present application, the present application also provides an electronic device and a readable storage medium.

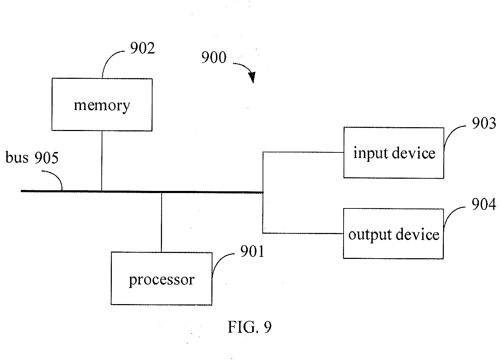

FIG. 9 is a block diagram of an electronic device 900 for testing a dialogue platform according to embodiments of the present application. The electronic device aims to represent various forms of digital computers, such as a laptop computer, a desktop computer, a workstation, a personal digital assistant, a server, a blade server, a mainframe computer and other suitable computers. The electronic device may also represent various forms of mobile devices, such as a personal digital processing, a cellular phone, a smart phone, a wearable device and other similar computing devices. The components, connections and relationships of the components, and functions of the components illustrated herein are merely examples, and are not intended to limit the implementation of the present application described and/or claimed herein.

As illustrated in FIG. 9, the electronic device 900 includes: one or more processors 901, a memory 902, and interfaces for connecting various components, including a high-speed interface and a low-speed interface. Various components are connected to each other with different buses, and may be mounted on a common main board or mounted in other ways as required. The processor may process instructions executed within the electronic device, including instructions stored in or on the memory to display graphical information of the GUI (graphical user interface) on an external input/output device (such as a display device coupled to an interface). In other implementations, a plurality of processors and/or a plurality of buses may be used together with a plurality of memories if necessary. Similarly, a plurality of electronic devices may be connected, and each electronic device provides a part of necessary operations (for example, as a server array, a group of blade servers, or a multiprocessor system). In FIG. 9, one processor 901 is taken as an example.

The memory 902 is a non-transitory computer readable storage medium according to the present application. The memory is configured to store instructions executable by at least one processor, to cause the at least one processor to execute a method for testing a dialogue platform according to the present application. The non-transitory computer readable storage medium according to the present application is configured to store computer instructions. The computer instructions are configured to enable a computer to execute the method for testing a dialogue platform according to the present application.

As the non-transitory computer readable storage medium, the memory 902 may be configured to store non-transitory software programs, non-transitory computer executable programs and modules, such as program instructions/modules (such as, the creating module 81, the starting module 82, the receiving module 83 and the dialogue test module 84 illustrated in FIG. 8) corresponding to the method for testing a dialogue platform according to embodiments of the present application. The processor 901 executes various functional applications and data processing of the server by operating non-transitory software programs, instructions and modules stored in the memory 902, that is, implements the method for controlling the vehicle according to the above method embodiment.

The memory 902 may include a storage program region and a storage data region. The storage program region may store an application required by an operating system and at least one function. The storage data region may store data created based on usage of the electronic device for testing a dialogue platform. In addition, the memory 902 may include a high-speed random access memory, and may also include a non-transitory memory, such as at least one disk memory device, a flash memory device, or other non-transitory solid-state memory device. In some embodiments, the memory 902 may optionally include memories remotely located to the processor 901 which may be connected to the electronic device capable of testing a dialogue platform via a network. Examples of the above network include, but are not limited to, the Internet, an intranet, a local area network, a mobile communication network and combinations thereof.

The electronic device capable of testing a dialogue platform may also include: an input device 903 and an output device 904. The processor 901, the memory 902, the input device 903, and the output device 904 may be connected through a bus 905 or in other means. In FIG. 9, the bus 905 is taken as an example.

The input device 903 may receive input digitals or character information, and generate key signal input related to user setting and function control of the electronic device capable of testing a dialogue platform, such as a touch screen, a keypad, a mouse, a track pad, a touch pad, an indicator stick, one or more mouse buttons, a trackball, a joystick and other input device. The output device 904 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be a touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device and at least one output device, and may transmit the data and the instructions to the storage system, the at least one input device and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including machine readable medium that receives machine instructions as machine readable signals. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components, or the front-end component. Components of the system may be connected to each other through digital data communication in any form or medium (such as, a communication network). Examples of the communication network include a local area network (LAN), a wide area networks (WAN), and the Internet.

The computer system may include a client and a server. The client and the server are generally remote from each other and usually interact via the communication network. A relationship between the client and the server is generated by computer programs operated on a corresponding computer and having a client-server relationship with each other.

According to the technical solution of the embodiments of the present application, at least one simulation test instance is created, wherein the simulation test instance includes a plurality of test task information, each test task information includes test numbers, ringing simulation data, and call simulation data; the test numbers are sent to the dialogue platform to start a test; the ringing simulation data are sent to the dialogue platform, to receive task states fed back by the dialogue platform; the call simulation data are sent to the dialogue platform, to receive dialogue data fed back by the dialogue platform; and a dialogue test is performed on the dialogue platform based on the test tasks, the task states corresponding to the test tasks, and the dialogue data. In this application, a plurality of test instances are created, corresponding dialogue test data is generated based on the simulation test instance, and the dialogue platform is tested based on the dialogue test data. In this way, the dependence on the call center is eliminated and the cost is thus reduced, the harassment to users is avoided and the test efficiency is thus improved, i.e., the problems in prior art are solved that the dialogue test must depend on the call center with high costs and low efficiency while causing the harassment to users.

It should be understood that, steps may be reordered, added or deleted by utilizing flows in the various forms illustrated above. For example, the steps described in the present application may be executed in parallel, sequentially or in different orders, so long as desired results of the technical solution disclosed by the present application may be achieved without limitation herein.

## Claims

1. A method for testing a dialogue platform, comprising:
creating (101) at least one simulation test instance, wherein the simulation test instance comprises a plurality of test task information, each test task information comprises test numbers, ringing simulation data, and call simulation data;
sending (102) the test numbers to the dialogue platform to start a test;
sending (103) the ringing simulation data to the dialogue platform, to receive task states fed back by the dialogue platform;
sending (104) the call simulation data to the dialogue platform, to receive dialogue data fed back by the dialogue platform; and
performing (105) a dialogue test on the dialogue platform based on the test tasks, the task states corresponding to the test tasks, and the dialogue data.

2. The method for testing the dialogue platform according to claim 1, further comprising:
obtaining (701) running state information of the dialogue platform; and
performing (702) a running test on the dialogue platform based on the running state information.

3. The method for testing the dialogue platform according to claim 1 or 2, further comprising:
constructing (201) dialogue simulation data based on the dialogue data fed back by the dialogue platform, and sending the dialogue simulation data to the dialogue platform; and
receiving (202) further dialogue data fed back by the dialogue platform.

4. The method for testing the dialogue platform according to any of claims 1-3, wherein the ringing simulation data are generated by:
obtaining (301) a current test number; and
in response to a determination that the current test number belongs to a preset number segment, setting (302) the ringing simulation data as a ringing state corresponding to the preset number segment.

5. The method for testing the dialogue platform according to any of claims 1-4, wherein the ringing simulation data are generated by:
generating (401) a random ratio value randomly; and
obtaining (402) a ratio interval to which the random ratio value belongs, and setting the ringing simulation data as a ringing state corresponding to the ratio interval.

6. The method for testing the dialogue platform according to any of claims 1-5, wherein the call simulation data are generated by:
obtaining (501) online call data; and
generating (502) the call simulation data based on the online call data.

7. The method for testing the dialogue platform according to any of claims 1-6, wherein the call simulation data are generated by:
determining (601) a plurality of call durations;
simulating and generating (602) a call record for each call duration; and
generating (603) the call simulation data based on the call durations and the call records.

8. An apparatus for testing a dialogue platform, comprising:
a creation module (81), configured to create at least one simulation test instance, wherein the simulation test instance comprises a plurality of test task information, each test task information comprises test numbers, ringing simulation data, and call simulation data;
a starting module (82), configured to send the test numbers to the dialogue platform to start the test;
a receiving module (83), configured to send the ringing simulation data to the dialogue platform to receive task states fed back by the dialogue platform; and further configured to send the call simulation data to the dialogue platform, to receive dialogue data fed back by the dialogue platform; and
a dialogue test module (84), configured to perform a dialogue test on the dialogue platform based on the test tasks, the task states corresponding to the test tasks, and the dialogue data.

9. The apparatus for testing the dialogue platform according to claim 8, further comprising:
an obtaining module, configured to obtain running state information of the dialogue platform; and
a running test module, configured to perform a running test on the dialogue platform based on the running state information.

10. The apparatus for testing the dialogue platform according to claim 8 or 9, further comprising:
a constructing module, configured to construct dialogue simulation data based on the dialogue data fed back by the dialogue platform, and send the dialogue simulation data to the dialogue platform; and
the receiving module, further configured to receive further dialogue data fed back by the dialogue platform.

11. The apparatus for testing the dialogue platform according to any of claims 8-10, wherein the creation module comprises:
an obtaining unit, configured to obtain a current test number; and
a setting unit, configured to set the ringing simulation data as a ringing state corresponding to a preset number segment in response to a determination that the current test number belongs to the preset number segment.

12. The apparatus for testing the dialogue platform according to any of claims 8-11, wherein the creation module further comprises:
a generating unit, configured to generate a random ratio value randomly; and
a setting unit, configured to a ratio interval to which the random ratio value belongs, and set the ringing simulation data as a ringing state corresponding to the ratio interval.

13. The apparatus for testing the dialogue platform according to any of claims 8-12, further comprising:
an obtaining unit, configured to obtain online call data; and
a generating unit, configured to generate the call simulation data based on the online call data.

14. The apparatus for testing the dialogue platform according to any of claims 8-13, further comprising:
a determining unit, configured to determining a plurality of call durations;
a generating unit, configured to simulate and generate a call record for each call duration, and to generate the call simulation data based on the call duration and the call record.

15. A non-transitory computer-readable storage medium having computer instructions stored thereon, wherein the computer instructions are configured to cause a computer to execute a method for testing a dialogue platform of any one of claims 1-7.
